# FASCICULE DE BREVET EUROPEEN

(11) **EP 3 123 015 B1**
(45) Date de publication et mention de la délivrance du brevet: **07.11.2018**
(21) Numéro de dépôt: 15717548.0
(22) Date de dépôt: 20.03.2015
(51) Int. Cl.: F02C 7/262, B64C 27/04, B64D 35/08, F02C 7/275, F02C 9/42

(54) **ARCHITECTURE D'UN SYSTEME PROPULSIF D'UN HELICOPTERE MULTI-MOTEUR ET HELICOPTERE CORRESPONDANT**
ARCHITEKTUR EINES MEHRMOTORIGEN HUBSCHRAUBERANTRIEBSSYSTEMS UND ZUGEHÖRIGER HUBSCHRAUBER
MULTI-ENGINED HELICOPTER ARCHITECTURE AND HELICOPTER

(30) Priorité: 27.03.2014 FR 1452647
(43) Date de publication de la demande: 01.02.2017
(73) Titulaire: Safran Helicopter Engines, 64510 Bordes (FR); Safran Power Units, 31200 Toulouse (FR)
(72) Inventeur: MERCIER-CALVAIRAC, Fabien, F-64000 Pau (FR); BEDDOK, Stéphane, F-77550 Moissy-Cramayel (FR); CHEVALIER, Stéphane, F-77550 Moissy-Cramayel (FR); HUMBERT, Sophie, F-77550 Moissy-Cramayel (FR)
(74) Mandataire: Gevers & Orès
(86) Numéro de dépôt international: PCT/FR2015/050693
(87) Numéro de publication internationale: WO 2015/145037

(56) Documents cités:
- EP-A2- 2 581 586
- FR-A1- 2 967 133
- FR-A1- 2 992 024
- US-A- 5 899 411

## Description

### 1. Domaine technique de l'invention

L'invention concerne une architecture d'un système propulsif d'un hélicoptère multi-moteur -en particulier bimoteur ou trimoteur- et un hélicoptère comprenant un système propulsif présentant une telle architecture.

### 2. Arrière-plan technologique

Un hélicoptère bimoteur ou trimoteur présente de manière connue un système propulsif comprenant deux ou trois turbomoteurs, chaque turbomoteur comprenant un générateur de gaz et une turbine libre entrainée en rotation par le générateur de gaz, et solidaire d'un arbre de sortie. L'arbre de sortie de chaque turbine libre est adapté pour mettre en mouvement une boite de transmission de puissance (désignée ci-après par l'acronyme BTP), qui entraîne elle-même le rotor de l'hélicoptère équipé de pales à pas variable.

Par ailleurs, il est connu que lorsque l'hélicoptère est en situation de vol de croisière (c'est-à-dire lorsqu'il évolue dans des conditions normales, en régime connu sous l'acronyme anglais AEO (*All Engines Operative*), au cours de toutes les phases du vol, hors phases transitoires de décollage, d'atterrissage ou de vol stationnaire), les turbomoteurs fonctionnent à des puissances faibles, inférieures à leur puissance maximale continue (ci-après, PMC). Dans certaines configurations, la puissance fournie par les turbomoteurs, lors d'un vol de croisière, peut être inférieure à 50 % de la puissance maximale de décollage (ci-après, PMD). Ces faibles niveaux de puissance entraînent une consommation spécifique (ci-après, Cs) définie comme le rapport entre la consommation horaire de carburant par la chambre de combustion du turbomoteur et la poussée fournie par ce turbomoteur, supérieure de l'ordre de 30% à la Cs de la PMD, et donc une baisse du rendement des turbines à gaz (ou une augmentation de Cs).

Afin de réduire cette consommation en vol de croisière (ou en attente au sol par exemple), il est possible d'arrêter l'un des turbomoteurs et de le placer en régime, dit de veille. Le ou les moteurs actifs fonctionnent alors à des niveaux de puissance plus élevés pour fournir toute la puissance nécessaire et donc à des niveaux de Cs plus favorables.

Dans toute la suite, on désignera par « phase de vol économique », une phase d'un vol au cours de laquelle au moins un turbomoteur est en veille et par « phase de vol classique », une phase d'un vol au cours de laquelle aucun turbomoteur n'est en veille.

Les demandeurs ont proposé dans les demandes FR1151717 et FR1359766, des procédés d'optimisation de la consommation spécifique des turbomoteurs d'un hélicoptère par la possibilité de placer au moins un turbomoteur dans un régime de vol stabilisé, dit continu, et au moins un turbomoteur dans un régime de veille particulier duquel il peut sortir de manière urgente ou normale, selon les besoins. Une sortie du régime de veille est dite normale lorsqu'un changement de situation de vol impose l'activation du turbomoteur en veille, par exemple lorsque l'hélicoptère va passer d'une situation de vol de croisière à une phase d'atterrissage. Une telle sortie de veille normale s'effectue sur une durée de 10s à 1 min. Une sortie du régime de veille est dite urgente lorsqu'une panne ou un déficit de puissance du moteur actif intervient ou que les conditions de vol deviennent soudainement difficiles. Une telle sortie de veille d'urgence s'effectue sur une durée inférieure à 10s.

La sortie d'un mode veille d'un turbomoteur et le passage d'une phase de vol économique à une phase de vol classique est obtenu par exemple par le biais d'un pack de redémarrage du turbomoteur associé à un dispositif de stockage d'énergie tel qu'un stockage électrochimique du type batterie Li-Ion, ou un stockage électrostatique du type surcapacité ou un stockage électromécanique du type volant d'inertie, qui permet de fournir au turbomoteur l'énergie nécessaire pour redémarrer et atteindre rapidement un régime de fonctionnement nominal. Un tel système est connu de EP 2 581 586 A2.

Un tel pack de redémarrage du turbomoteur en veille présente l'inconvénient d'alourdir sensiblement le poids total du turbomoteur. Le gain en consommation de carburant par la mise en veille du turbomoteur est donc en partie perdu par le surpoids occasionné par le dispositif de redémarrage, le dispositif de stockage d'énergie nécessaire au redémarrage, en particulier lorsque chaque turbomoteur est équipé d'un tel dispositif de redémarrage d'urgence.

Les inventeurs ont donc cherché à concilier des problèmes a priori incompatibles que sont la possibilité de mettre l'hélicoptère en phase de vol économique, c'est-à-dire de placer au moins un turbomoteur en veille, sans générer un surpoids trop important de l'ensemble du système propulsif.

En d'autres termes, les inventeurs ont cherché à proposer une architecture nouvelle du système propulsif d'un hélicoptère bimoteur ou trimoteur.

### 3. Objectifs de l'invention

L'invention vise à fournir une architecture nouvelle du système propulsif d'un hélicoptère multi-moteur.

L'invention vise aussi à fournir une architecture d'un système propulsif d'un hélicoptère multi-moteur qui autorise la mise en veille d'un turbomoteur et son redémarrage rapide.

L'invention vise aussi à fournir, dans au moins un mode de réalisation de l'invention, une architecture qui présente une masse et un volume non rédhibitoires pour pouvoir être embarquée dans un hélicoptère.

L'invention vise aussi à fournir, dans au moins un mode de réalisation de l'invention, une architecture qui présente un coût inférieur aux architectures de l'art antérieur à performances égales.

### 4. Exposé de l'invention

Pour ce faire l'invention concerne une architecture d'un système propulsif d'un hélicoptère multi-moteur selon la revendication 1 et comprenant des turbomoteurs reliés à une boite de transmission de puissance, où elle comprend :
- au moins un turbomoteur parmi lesdits turbomoteurs, dit turbomoteur hybride, apte à fonctionner dans au moins un régime de veille au cours d'un vol stabilisé de l'hélicoptère, les autres turbomoteurs fonctionnant seuls au cours de ce vol stabilisé,
- au moins un pack de redémarrage rapide d'un turbomoteur hybride pour le sortir dudit régime de veille et atteindre un régime de fonctionnement nominal,
- au moins une unité de puissance auxiliaire reliée à un pack de redémarrage et adaptée pour fournir, sur commande, une puissance nécessaire à ce pack de redémarrage pour sortir ledit turbomoteur hybride correspondant dudit régime de veille.

L'architecture du système propulsif d'un hélicoptère multi-moteur selon l'invention prévoit donc de disposer d'au moins un turbomoteur hybride, les autres turbomoteurs étant non hybrides, chaque turbomoteur hybride étant adapté pour fonctionner dans un régime de veille. L'architecture selon l'invention est donc dissymétrique car elle présente au moins un turbomoteur hybride et au moins un turbomoteur non hybride.

Un turbomoteur hybride est un turbomoteur configuré pour pouvoir être mis, sur commande et volontairement, dans au moins un régime de veille prédéterminé, duquel il peut sortir de manière normale ou rapide (aussi dite urgente). Un turbomoteur ne peut être en veille qu'au cours d'un vol stabilisé de l'hélicoptère, c'est-à-dire, hors panne d'un turbomoteur de l'hélicoptère, au cours d'une situation de vol de croisière, lorsqu'il évolue dans des conditions normales. La sortie du régime de veille consiste à passer le turbomoteur en mode accélération du générateur de gaz par un entrainement compatible avec le mode de sortie imposée par les conditions (sortie de veille normale ou sortie de veille rapide (aussi dite d'urgence).

En outre, l'architecture prévoit au moins un pack de redémarrage alimentée en courant par une unité de puissance auxiliaire, ce qui permet de s'affranchir des inconvénients de l'art antérieur liés à l'utilisation d'une source de stockage d'énergie du type batterie ou super-capacité.

Une telle unité de puissance auxiliaire (désignée ci-après par l'acronyme APU) permet d'assurer une alimentation électrique pérenne d'un pack de redémarrage d'un turbomoteur hybride, quelles que soient les conditions atmosphériques (notamment quelle que soit la température) et constante dans le temps (pas d'effet de vieillissement).

Cette APU peut par exemple comprendre un moteur thermique (du type turbine à gaz liée ou moteur deux temps ou quatre temps essence ou diesel) et un générateur-démarreur capable de démarrer la combustion de l'unité et de fournir la puissance électrique nécessaire au pack électrotechnique.

Une architecture selon l'invention est particulièrement adaptée aux hélicoptères comprenant déjà une unité auxiliaire de puissance destinée, par exemple, à fournir de la puissance non propulsive -électrique, mécanique, hydraulique et/ou pneumatique- dans toutes les phases du vol où les turbomoteurs ne sont pas en mesure de le faire : au sol, dans les phases de transition (décollage, atterrissage), dans les phases d'approche, etc. L'utilisation de cette APU en lien avec un pack de redémarrage d'une architecture selon l'invention permet donc de se passer d'un système de stockage d'énergie pour assister un turbomoteur en veille.

Un pack de redémarrage d'une architecture selon l'invention est par exemple un pack électrotechnique, pyrotechnique, pneumatique ou hydraulique. Dans toute la suite, il sera particulièrement fait mention d'un pack de redémarrage électrotechnique, étant entendu que l'invention s'étend également à une architecture munie d'un pack de redémarrage pyrotechnique, pneumatique ou hydraulique.

Avantageusement, une unité de puissance auxiliaire présente une fonction de mise en veille économique, chambre allumée, à bas régime, et une fonction de sortie rapide de ce mode de veille afin de délivrer rapidement sa puissance maximale au pack électrotechnique pour redémarrer un turbomoteur hybride. La puissance électrique est disponible dans un délai compatible avec les impératifs de sécurité du vol, notamment en cas redémarrage d'urgence d'un turbomoteur en veille, en cas de perte d'un turbomoteur non hybride.

Avantageusement, une architecture selon l'invention comprend :
- un seul turbomoteur hybride, apte à fonctionner dans au moins un régime de veille au cours d'un vol stabilisé de l'hélicoptère, les autres turbomoteurs fonctionnant seuls au cours de ce vol stabilisé,
- un seul pack de redémarrage rapide dudit turbomoteur hybride pour le sortir dudit régime de veille et atteindre un régime de fonctionnement nominal,
- une seule unité de puissance auxiliaire reliée audit pack de redémarrage et adaptée pour fournir, sur commande, une puissance nécessaire audit pack de redémarrage pour sortir ledit turbomoteur hybride dudit régime de veille.

Une architecture qui ne présente qu'un seul turbomoteur hybride, qu'un seul pack de redémarrage et qu'une seule unité de puissance auxiliaire reliée audit pack de redémarrage permet de minimiser le nombre de composants. En outre, cela limite le poids total du système propulsif. Une telle architecture permet donc à la fois de combiner les avantages d'une optimisation du Cs par la possibilité de mettre un turbomoteur en veille, et d'un encombrement et poids réduits.

Avantageusement et selon cette variante, l'architecture comprend : un réseau de bord basse tension continue (ci-après désigné par l'acronyme RDB) destiné à alimenter en vol des équipements de l'hélicoptère ; au moins une source d'alimentation électrique dudit réseau de bord, et ladite unité de puissance auxiliaire est reliée audit réseau de bord par l'intermédiaire d'un convertisseur alternatif-continu.

Ladite unité de puissance auxiliaire est reliée au pack électrotechnique par l'intermédiaire d'un convertisseur alternatif-continu. Un tel convertisseur permet d'utiliser une unité de puissance auxiliaire qui fournit une tension alternative et un pack électrotechnique à courant continu. Selon une autre variante, l'unité de puissance auxiliaire génère directement un courant continu.

L'unité de puissance permet non seulement de fournir l'énergie nécessaire au redémarrage du turbomoteur hybride, mais également d'alimenter le réseau de bord. L'architecture présente donc une redondance de la génération électrique (par une source d'alimentation électrique et par l'unité auxiliaire de puissance) pour l'alimentation du RDB de telle sorte qu'une panne éventuelle de la première source d'alimentation du RDB est supplée par la deuxième source d'alimentation.

Selon cette variante et avantageusement, l'architecture comprend un contacteur agencé entre ladite unité auxiliaire et ledit réseau de bord et commandé pour découpler ladite unité auxiliaire de puissance dudit réseau de bord lors d'un redémarrage d'urgence dudit turbomoteur hybride.

Selon cette variante, l'unité de puissance auxiliaire peut fournir la totalité de sa puissance au turbomoteur hybride pour un redémarrage de ce turbomoteur. Le contacteur permet en effet de découper l'unité auxiliaire du réseau de bord de telle sorte que la totalité de la puissance de l'unité auxiliaire est destinée au turbomoteur. L'alimentation du RDB est maintenue par la source d'alimentation qui supplée alors l'indisponibilité de l'unité auxiliaire.

Le contacteur peut être agencé en amont ou en aval du convertisseur alternatif-continu.

Avantageusement et selon cette variante, la source d'alimentation électrique dudit réseau de bord est choisie dans le groupe comprenant :
- au moins une génératrice de courant agencée entre ladite boite de transmission de puissance et ledit réseau de bord associée à un convertisseur alternatif-continu,
- une génératrice-démarreur agencée entre un turbomoteur non hybride et ledit réseau de bord.

Selon une autre variante, l'unité de puissance auxiliaire peut être mise en veille pendant les phases de vol de croisière et donc ne peut, de ce fait, plus assurer la fonction génération. Dans ce cas, l'architecture doit comprendre deux sources d'alimentation du RDB. Par exemple, une première source d'alimentation électrique est une génératrice agencée entre la BTP et le RDB, associée à un convertisseur alternatif-continu, et une seconde source d'alimentation électrique est une génératrice-démarreur agencée entre un turbomoteur non hybride et le RDB.

Avantageusement et selon cette variante, ladite génératrice est adaptée pour fournir une tension alternative de 115 volts et ledit convertisseur associé est adapté pour fournir une tension continue de 28 volts.

Avantageusement et selon l'invention, ledit pack de redémarrage rapide comprend : une machine électrique adaptée pour redémarrer ledit turbomoteur hybride dans des conditions normales de sortie de veille, et un dispositif de sortie de veille d'urgence adapté pour redémarrer ledit turbomoteur hybride dans des conditions d'urgence de sortie de veille.

Un turbomoteur comprend de manière connue un générateur de gaz et une turbine libre alimentée par les gaz du générateur de gaz. Le générateur de gaz comprend un arbre et une chambre de combustion alimentée en carburant.

Un régime de sortie de veille d'urgence est un régime dans lequel la chambre de combustion est allumée et l'arbre du générateur de gaz est entraîné vers une vitesse comprise entre 80 et 105%, dans un délai inférieur à 10s après une commande de sortie de veille.

Un régime de sortie de veille normale, est un régime dans lequel la chambre de combustion est allumée et l'arbre du générateur de gaz est entraîné vers une vitesse comprise entre 80 et 105%, dans un délai compris entre 10s et 1min après une commande de sortie de veille.

La machine électrique peut être une machine électrique qui fonctionne en courant alternatif ou en courant continu.

Avantageusement et selon l'invention, ledit dispositif de sortie de veille d'urgence est un dispositif électrotechnique, pyrotechnique, pneumatique ou hydraulique.

Avantageusement et selon l'invention, ladite unité de puissance auxiliaire est reliée au pack de redémarrage par l'intermédiaire d'un convertisseur alternatif-continu.

L'invention concerne également un hélicoptère comprenant un système propulsif caractérisé en ce que ledit système propulsif présente une architecture selon l'invention.

L'invention concerne également une architecture d'un système propulsif d'un hélicoptère multi-moteurs et un hélicoptère équipé d'un système propulsif présentant une telle architecture caractérisés en combinaison par tout ou partie des caractéristiques mentionnées ci-dessus ou ci-après.

### 5. Liste des figures

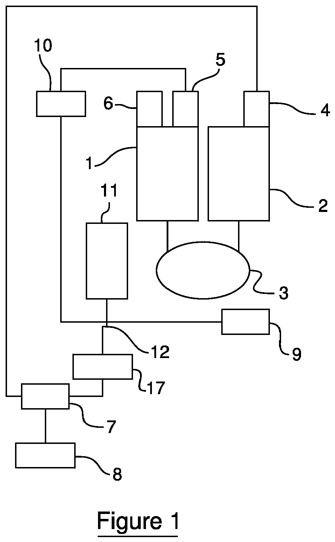

D'autres buts, caractéristiques et avantages de l'invention apparaîtront à la lecture de la description suivante donnée à titre uniquement non limitatif et qui se réfère à la figure 1 annexée qui est une vue schématique d'une architecture d'un système propulsif d'un hélicoptère bimoteur selon un mode de réalisation de l'invention.

### 6. Description détaillée d'un mode de réalisation de l'invention

La figure 1 est une vue schématique d'une architecture d'un système propulsif d'un hélicoptère bimoteur selon un mode de réalisation de l'invention. Cette architecture comprend deux turbomoteurs 1, 2 reliés à une boîte 3 de transmission de puissance. Chaque turbomoteur 1, 2 est piloté par un dispositif de contrôle-commande propre non représenté sur la figure à des fins de clarté.

De manière connue, chaque turbomoteur comprend en outre un générateur de gaz et une turbine libre solidaire d'un arbre de sortie entrainée en rotation par le générateur de gaz. L'arbre de sortie de chaque turbine libre est adapté pour mettre en mouvement la boite 3 de transmission de puissance (désignée ci-après par l'acronyme BTP), qui entraîne elle-même le rotor de l'hélicoptère équipé par exemple de pales à pas variable.

Selon l'invention, le turbomoteur 1 est un turbomoteur hybride, apte à fonctionner dans au moins un régime de veille au cours d'un vol stabilisé de l'hélicoptère.

Ce régime de veille est de préférence choisi parmi les régimes de fonctionnement suivant :
- un régime de veille, dit ralenti usuel, dans lequel la chambre de combustion est allumée et l'arbre du générateur de gaz tourne à une vitesse comprise entre 60 et 80% de la vitesse nominale,
- un régime de veille, dit super-ralenti usuel, dans lequel la chambre de combustion est allumée et l'arbre du générateur de gaz tourne à une vitesse comprise entre 20 et 60% de la vitesse nominale,
- un régime de veille, dit super-ralenti assisté, dans lequel la chambre de combustion est allumée et l'arbre du générateur de gaz tourne, assisté mécaniquement, à une vitesse comprise entre 20 et 60% de la vitesse nominale,
- un régime de veille, dit vireur, dans lequel la chambre de combustion est éteinte et l'arbre du générateur de gaz tourne, assisté mécaniquement, à une vitesse comprise entre 5 et 20% de la vitesse nominale,
- un régime de veille, dit d'arrêt, dans lequel la chambre de combustion est éteinte et l'arbre du générateur de gaz est à l'arrêt complet.

L'architecture comprend en outre un pack 5, 6 électrotechnique de redémarrage rapide du turbomoteur 1 hybride pour le sortir du régime de veille et atteindre un régime de fonctionnement nominal.

Ce pack 5, 6 de redémarrage est alimenté en électricité par une unité 11 auxiliaire de puissance (désignée ci-après par l'acronyme APU) par l'intermédiaire d'un convertisseur 10 de tension alternatif-continu. Ce moteur auxiliaire fournit, sur commande, de la puissance non propulsive au pack 5, 6 électrotechnique pour lui permettre de sortir le turbomoteur 1 hybride de son régime de veille.

Cette APU 11 peut par exemple comprendre un moteur thermique (du type turbine à gaz liée ou moteur deux temps ou quatre temps essence ou diesel) et un générateur-démarreur capable de démarrer la combustion de l'APU et de fournir la puissance électrique nécessaire au pack électrotechnique. De préférence, l'APU fournit une tension alternative de 115 volts.

Le convertisseur 10 de tension alternatif-continu permet de convertir la haute tension alternative de 115 volts fournie par l'APU 11 en haute tension continue nécessaire au redémarrage du turbomoteur 1. Selon d'autres modes de réalisation, l'APU fournit directement une tension continue et il n'est alors pas nécessaire de disposer du convertisseur 10 de tension.

L'architecture comprend en outre un réseau 7 de bord basse tension, de préférence 28 Volts, (ci-après désigné par l'acronyme RDB) destiné à alimenter en vol des équipements de l'hélicoptère.

Ce RDB 7 est alimenté en courant à la fois par l'APU 11 par l'intermédiaire d'un convertisseur 17 alternatif haute tension-continu basse tension et par une génératrice-démarreur 4 relié au turbomoteur 2 qui fournit directement de la basse tension continue. Le RDB 7 alimente en outre une batterie 8 de stockage d'énergie 28 volts. Selon une autre variante, non représenté sur la figure, l'alimentation du RDB 7 est assurée par une génératrice montée sur la BTP 3.

Afin de ne pas perturber le redémarrage du turbomoteur 1, un contacteur 12 est agencé entre le RDB 7 et l'APU 11 pour désaccoupler le RDB7 et l'APU 11 lorsque toute la puissance électrique de l'APU 11 est nécessaire pour assurer la sortie du régime de veille du turbomoteur 1.

De préférence, l'APU fournit une tension alternative de 115 Volts et le RDB 7 est un réseau de 28 Volts continus. Cette APU 11 peut également alimenter directement des équipements 9 spécifiques de l'hélicoptère.

Selon le mode de réalisation de la figure 1, le pack de redémarrage rapide comprend une machine 5 électrique adaptée pour redémarrer le turbomoteur 1 hybride dans des conditions normales de sortie de veille, et un dispositif 6 de sortie de veille d'urgence adapté pour redémarrer le turbomoteur 1 dans des conditions d'urgence de sortie de veille.

Ce dispositif 6 de sortie de veille d'urgence est par exemple un dispositif électrique, pyrotechnique, pneumatique ou hydraulique.

Selon un autre mode de réalisation de l'invention non représenté sur la figure, l'APU est configuré pour fournir une tension continue et la machine électrique est configurée pour fonctionner en courant alternatif. Dans ce cas, un onduleur est agencé entre l'APU et la machine électrique pour redresser le courant et alimenter la machine électrique par l'énergie produite par l'APU.

L'invention ne se limite pas aux seuls modes de réalisation décrits. En particulier, l'architecture peut comprendre trois turbomoteurs pour l'équipement d'un hélicoptère tri moteur.

## Revendications

1. Architecture d'un système propulsif d'un hélicoptère multi-moteur, ladite architecture comprenant des turbomoteurs (1, 2) reliés à une boite (3) de transmission de puissance, comprenant:
- au moins un turbomoteur parmi lesdits turbomoteurs, dit turbomoteur (1) hybride, apte à fonctionner dans au moins un régime de veille au cours d'un vol stabilisé de l'hélicoptère, les autres turbomoteurs (2) fonctionnant seuls au cours de ce vol stabilisé, et
- au moins un pack (5, 6) de redémarrage rapide d'un turbomoteur (1) hybride pour le sortir dudit régime de veille et atteindre un régime de fonctionnement nominal,
**caractérisée en ce qu'**elle comprend en outre:
- au moins une unité (11) de puissance auxiliaire reliée à un pack (5, 6) de redémarrage et adaptée pour fournir, sur commande, une puissance nécessaire à ce pack (5, 6) de redémarrage pour sortir ledit turbomoteur (1) hybride correspondant dudit régime de veille.

2. Architecture selon la revendication 1, **caractérisé en ce qu'**elle comprend :
- un seul turbomoteur (1) hybride, apte à fonctionner dans au moins un régime de veille au cours d'un vol stabilisé de l'hélicoptère, les autres turbomoteurs (2) fonctionnant seuls au cours de ce vol stabilisé,
- un seul pack (5, 6) de redémarrage rapide dudit turbomoteur (1) hybride pour le sortir dudit régime de veille et atteindre un régime de fonctionnement nominal,
- une seule unité (11) de puissance auxiliaire reliée audit pack (5, 6) de redémarrage et adaptée pour fournir, sur commande, une puissance nécessaire audit pack (5, 6) de redémarrage pour sortir ledit turbomoteur (1) hybride dudit régime de veille.

3. Architecture selon la revendication 2, **caractérisée en ce qu'**elle comprend :
- un réseau (7) de bord basse tension continue destiné à alimenter en vol des équipements de l'hélicoptère,
- au moins une source (4) d'alimentation électrique dudit réseau (7) de bord,
et **en ce que** ladite unité (11) de puissance auxiliaire est reliée audit réseau (7) de bord par l'intermédiaire d'un (17) convertisseur alternatif-continu.

4. Architecture selon la revendication 3, **caractérisée en ce qu'**elle comprend un contacteur (12) agencé entre ladite unité (11) auxiliaire et ledit réseau (7) de bord et commandé pour découpler ladite unité (11) auxiliaire de puissance dudit réseau (7) de bord lors d'un redémarrage d'urgence dudit turbomoteur (1) hybride.

5. Architecture selon l'une des revendications 3 ou 4, **caractérisée en ce que** ladite source (4) d'alimentation électrique dudit réseau de bord est choisie dans le groupe comprenant :
- au moins une génératrice de courant agencée entre ladite boite de transmission de puissance et ledit réseau de bord associée à un convertisseur alternatif-continu,
- une génératrice-démarreur (4) agencée entre un turbomoteur non hybridé et ledit réseau de bord.

6. Architecture selon la revendication 5, **caractérisée en ce que** ladite génératrice est adaptée pour fournir une tension alternative de 115 volts et **en ce que** ledit convertisseur associé est adapté pour fournir une tension continue de 28 volts.

7. Architecture selon l'une des revendications 1 à 6, **caractérisée en ce qu'**au moins un pack (5, 6) de redémarrage rapide comprend une machine (5) électrique adaptée pour redémarrer au moins un turbomoteur (1) hybride dans des conditions normales de sortie de veille, et un dispositif (6) de sortie de veille d'urgence adapté pour redémarrer ce turbomoteur (1) hybride dans des conditions d'urgence de sortie de veille.

8. Architecture selon la revendication 7, **caractérisée en ce que** ledit dispositif de sortie de veille d'urgence peut être un dispositif électrotechnique, pyrotechnique, pneumatique ou hydraulique.

9. Architecture selon l'une des revendications 1 à 8, **caractérisée en ce qu'**au moins une unité (11) de puissance auxiliaire est reliée à un pack de redémarrage par l'intermédiaire d'un convertisseur (10) alternatif-continu.

10. Hélicoptère comprenant un système propulsif **caractérisé en ce que** ledit système propulsif présente une architecture selon l'une des revendications 1 à 9.

## Patentansprüche

1. Architektur eines mehrmotorigen Hubschrauberantriebssystems, wobei die Architektur Turbomotoren (1, 2) umfasst, die mit einem Leistungsübertragungsgetriebe (3) verbunden sind, umfassend:
- mindestens einen Turbomotor aus den Turbomotoren, Hybrid-Turbomotor (1) genannt, der geeignet ist, während eines stabilisierten Hubschrauberflugs in mindestens einer Standby-Betriebsart zu arbeiten, wobei die anderen Turbomotoren (2) während dieses stabilisierten Fluges allein arbeiten, und
- mindestens ein Schnellneustart-Pack (5, 6) eines Hybrid-Turbomotors (1), um ihn aus der Standby-Betriebsart herauszunehmen und eine Nennbetriebsart zu erreichen,
**dadurch gekennzeichnet, dass** sie weiter Folgendes umfasst:
- mindestens eine Hilfsleistungseinheit (11), die mit einem Neustart-Pack (5, 6) verbunden und angepasst ist, auf Befehl eine Leistung bereitzustellen, die für dieses Neustart-Pack (5, 6) zum Herausnehmen des entsprechenden Hybrid-Turbomotors (1) aus der Standby-Betriebsart erforderlich ist.

2. Architektur nach Anspruch 1, **dadurch gekennzeichnet, dass** sie Folgendes umfasst:
- einen einzelnen Hybrid-Turbomotor (1), der geeignet ist, während eines stabilisierten Hubschrauberflugs in mindestens einer Standby-Betriebsart zu arbeiten, wobei die anderen Turbomotoren (2) während dieses stabilisierten Fluges allein arbeiten,
- ein einzelnes Schnellneustart-Pack (5, 6) des Hybrid-Turbomotors (1), um ihn aus der Standby-Betriebsart herauszunehmen und eine Nennbetriebsart zu erreichen,
- eine einzelne Hilfsleistungseinheit (11), die mit dem Neustart-Pack (5, 6) verbunden und angepasst ist, auf Befehl eine Leistung bereitzustellen, die für dieses Neustart-Pack (5, 6) zum Herausnehmen des Hybrid-Turbomotors (1) aus der Standby-Betriebsart erforderlich ist.

3. Architektur nach Anspruch 2, **dadurch gekennzeichnet, dass** sie Folgendes umfasst:
- ein Bordnetz (7) mit Niedergleichspannung, das zur Versorgung von Hubschrauberausrüstungen während des Fluges bestimmt ist,
- mindestens eine Stromversorgungsquelle (4) des Bordnetzes (7),
und dass die Hilfsleistungseinheit (11) über einen (17) Wechselstrom-Gleichstromwandler mit dem Bordnetz (7) verbunden ist.

4. Architektur nach Anspruch 3, **dadurch gekennzeichnet, dass** sie ein Schütz (12) umfasst, das zwischen der Hilfseinheit (11) und dem Bordnetz (7) angeordnet ist und zur Entkopplung der Hilfsleistungseinheit (11) von dem Bordnetz (7) während eines Notneustarts des Hybrid-Turbomotors (1) gesteuert wird.

5. Architektur nach einem der Ansprüche 3 oder 4, **dadurch gekennzeichnet, dass** die Stromversorgungsquelle (4) des Bordnetzes ausgewählt ist aus der Gruppe, umfassend:
- mindestens einen Stromgenerator, der zwischen dem Leistungsübertragungsgetriebe und dem Bordnetz angeordnet ist, der einem Wechselstrom-Gleichstromwandler zugeordnet ist,
- einen Starter-Generator (4), der zwischen einem Nicht-Hybrid-Turbomotor und dem Bordnetz angeordnet ist.

6. Architektur nach Anspruch 5, **dadurch gekennzeichnet, dass** der Generator zum Bereitstellen einer Wechselspannung von 115 Volt angepasst ist und dass der zugehörige Wandler zum Bereitstellen einer Gleichspannung von 28 Volt angepasst ist.

7. Architektur nach einem der Ansprüche 1 bis 6, **dadurch gekennzeichnet, dass** mindestens ein Schnellneustart-Pack (5, 6) eine elektrische Maschine (5), die zum Neustart mindestens eines Hybrid-Turbomotors (1) unter normalen Bedingungen zum Verlassen der Standby-Betriebsart angepasst ist, und eine Notfallvorrichtung (6) zum Verlassen der Standby-Betriebsart umfasst, die zum Neustart dieses Hybrid-Turbomotors (1) unter Notfallbedingungen zum Verlassen der Standby-Betriebsart angepasst ist.

8. Architektur nach Anspruch 7, **dadurch gekennzeichnet, dass** die Notfallvorrichtung zum Verlassen der Standby-Betriebsart eine elektrotechnische, pyrotechnische, pneumatische oder hydraulische Vorrichtung sein kann.

9. Architektur nach einem der Ansprüche 1 bis 8, **dadurch gekennzeichnet, dass** mindestens eine Hilfsleistungseinheit (11) über einen Wechselstrom-Gleichstromwandler (10) mit einem Neustart-Pack verbunden ist.

10. Hubschrauber, der ein Antriebssystem umfasst, **dadurch gekennzeichnet, dass** das Antriebssystem eine Architektur nach einem der Ansprüche 1 bis 9 aufweist.

## Claims

1. Architecture of a propulsion system of a multi-engine helicopter, said architecture comprising turboshaft engines (1, 2) that are connected to a power transmission gearbox (3), comprising:
- at least one turboshaft engine among said turboshaft engines, referred to as a hybrid turboshaft engine (1), which is capable of operating in at least one standby mode during a stable flight of the helicopter, the other turboshaft engines (2) operating alone during this stable flight, and
- at least one pack (5, 6) for quickly restarting a hybrid turboshaft engine (1) in order bring said engine out of said standby mode and to reach a nominal operating mode,
**characterised in that** it further comprises:
- at least one auxiliary power unit (11) that is connected to a restart pack (5, 6) and is capable of providing said restart pack (5, 6), on demand, with power required for bringing said corresponding hybrid turboshaft engine (1) out of said standby mode.

2. Architecture according to claim 1, **characterised in that** it comprises:
- just one hybrid turboshaft engine (1) capable of operating in at least one standby mode during a stable flight of the helicopter, the other turboshaft engines (2) operating alone during this stable flight,
- just one pack (5, 6) for quickly restarting said hybrid turboshaft engine (1) in order to bring said engine out of said standby mode and to reach a nominal operating mode,
- just one auxiliary power unit (11) that is connected to said restart pack (5, 6) and is capable of providing said restart pack (5, 6), on demand, with power necessary for bringing said hybrid turboshaft engine (1) out of said standby mode.

3. Architecture according to claim 2, **characterised in that** it comprises:
- a low DC voltage onboard network (7) for supplying power to helicopter equipment during flight,
- at least one source (4) of electrical power for said onboard network (7),
and **in that** said auxiliary power unit (11) is connected to said onboard network (7) by means of an AC/DC converter (17).

4. Architecture according to claim 3, **characterised in that** it comprises a contact switch (12) that is arranged between said auxiliary unit (11) and said onboard network (7) and is controlled such as to decouple said auxiliary power unit (11) from said onboard network (7) when said hybrid turboshaft engine (1) is restarted in an emergency.

5. Architecture according to either claim 3 or claim 4, **characterised in that** said electrical power source (4) of said onboard network is selected from the group comprising:
- at least one current generator that is arranged between said power transmission gearbox and said onboard network and is associated with an AC-DC converter,
- a starter-generator (4) that is arranged between a non-hybrid turboshaft engine and said onboard network.

6. Architecture according to claim 5, **characterised in that** said generator is capable of providing an AC voltage of 115 volts and **in that** said associated converter is capable of providing a DC voltage of 28 volts.

7. Architecture according to any of claims 1 to 6, **characterised in that** at least one quick restart pack (5, 6) comprises an electrical machine (5) that is capable of restarting at least one hybrid turboshaft engine (1) when leaving standby in normal conditions, and a device (6) for leaving standby in an emergency that is capable of restarting said hybrid turboshaft engine (1) when leaving standby in emergency conditions.

8. Architecture according to claim 7, **characterised in that** said device for leaving standby in an emergency can be an electrotechnical, pyrotechnic, pneumatic or hydraulic device.

9. Architecture according to any of claims 1 to 8, **characterised in that** at least one auxiliary power unit (11) is connected to a restart pack by means of an AC/DC converter (10).

10. Helicopter comprising a propulsion system, **characterised in that** said propulsion system has an architecture according to any of claims 1 to 9.
